# EUROPEAN PATENT APPLICATION

(11) **EP 4 355 003 A1**
(43) Date of publication of application: **17.04.2024**
(21) Application number: 22819427.0
(22) Date of filing: 01.06.2022
(51) Int. Cl.: H04W 72/12, H04W 72/04

(54) **DATA NETWORK UPLINK SCHEDULING METHOD AND APPARATUS, AND ELECTRONIC DEVICE**

(30) Priority: 07.06.2021 CN 202110631078
(71) Applicant: Vivo Mobile Communication Co., Ltd., Dongguan, Guangdong 523863 (CN)
(72) Inventor: ZHANG, Jing, Dongguan, Guangdong 523863 (CN); WU, Mengxiang, Dongguan, Guangdong 523863 (CN); ZHANG, Jiru, Dongguan, Guangdong 523863 (CN)
(74) Representative: Conti, Marco
(86) International application number: PCT/CN2022/096603
(87) International publication number: WO 2022/257829

(57) **Abstract**

The application discloses a data network uplink scheduling method and apparatus and an electronic device, which belong to the technical field of communication. The method includes: determining a maximum data volume of an uplink data packet to be sent by a target application program; and applying, according to a resource amount of the uplink data packet corresponding to the maximum data volume, for an uplink resource for the uplink data packet to be sent.

## Description

### CROSS-REFERENCE TO RELATED APPLICATIONS

This application claims priority to Chinese Patent Application No. 202110631078.3, filed on June 7, 2021 in China, which is incorporated herein by reference in its entirety.

### TECHNICAL FIELD

This application belongs to the technical field of communications, and in particular relates to a data network uplink scheduling method and apparatus and an electronic device.

### BACKGROUND

In daily life, many data network scheduling scenes mostly have the problem that the effect of network scheduling is not obvious, and network uplink resources that can be allocated to users are insufficient. In these environments, users obviously feel the uplink stuck of data networks. For example, when a user is playing some games that have high requirements on uplink delays, the operation has stuck during the game. In the current uplink data scheduling method, an electronic device usually applies for network resources from a network side device based on the restrictions of the Media Access Control (Media Access Control, MAC) layer. Network resources configured by the network side device cannot meet the transmission requirements of uplink data, and data packet transmission delay may occur, resulting in poor performance of data packet transmission.

### SUMMARY

The purpose of the embodiment of this application is to provide a data network uplink scheduling method and apparatus and an electronic device to solve the problem of poor performance of uplink data packet transmission.

According to a first aspect, the embodiment of this application provides a data network uplink scheduling method, including:
determining a maximum data volume of an uplink data packet to be sent by a target application program; and
applying, according to a resource amount of the uplink data packet corresponding to the maximum data volume, for an uplink resource for the uplink data packet to be sent.

According to a second aspect, the embodiment of this application provides a data network uplink scheduling apparatus, including:
a determining module, configured to determine a maximum data volume of an uplink data packet to be sent by a target application program; and
a resource application module, configured to apply, according to a resource amount of the uplink data packet corresponding to the maximum data volume, for an uplink resource for the uplink data packet to be sent.

According to a third aspect, an embodiment of this application provides an electronic device, where the electronic device includes a processor, a memory, and a program or an instruction stored in the memory and executable on the processor, and when the program or the instruction is executed by the processor, steps of the method according to the first aspect are implemented.

According to a fourth aspect, an embodiment of this application provides a readable storage medium. The readable storage medium stores a program or instructions, and when the program or the instructions are executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction to implement the method in the first aspect.

According to a sixth aspect, a computer program product is provided. The computer program product is stored in a non-volatile storage medium, and the computer program product is executed by at least one processor to implement the method described in the first aspect.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

### BRIEF DESCRIPTION OF DRAWINGS

FIG. 1 is a first schematic flowchart of a data network uplink scheduling method according to an embodiment of this application;
FIG. 2 is a first schematic diagram of uplink resource application according to an embodiment of this application;
FIG. 3 is a second schematic diagram of uplink resource application according to an embodiment of this application;
FIG. 4 is a second schematic flowchart of a data network uplink scheduling method according to an embodiment of this application;
FIG. 5 is a schematic structural diagram of a data network uplink scheduling apparatus according to an embodiment of this application;
FIG. 6 is a first schematic structural diagram of an electronic device according to an embodiment of this application; and
FIG. 7 is a second schematic structural diagram of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

The data network uplink scheduling method and apparatus and electronic device provided by the embodiments of this application will be described in detail below through specific embodiments and application scenes with reference to the accompanying drawings.

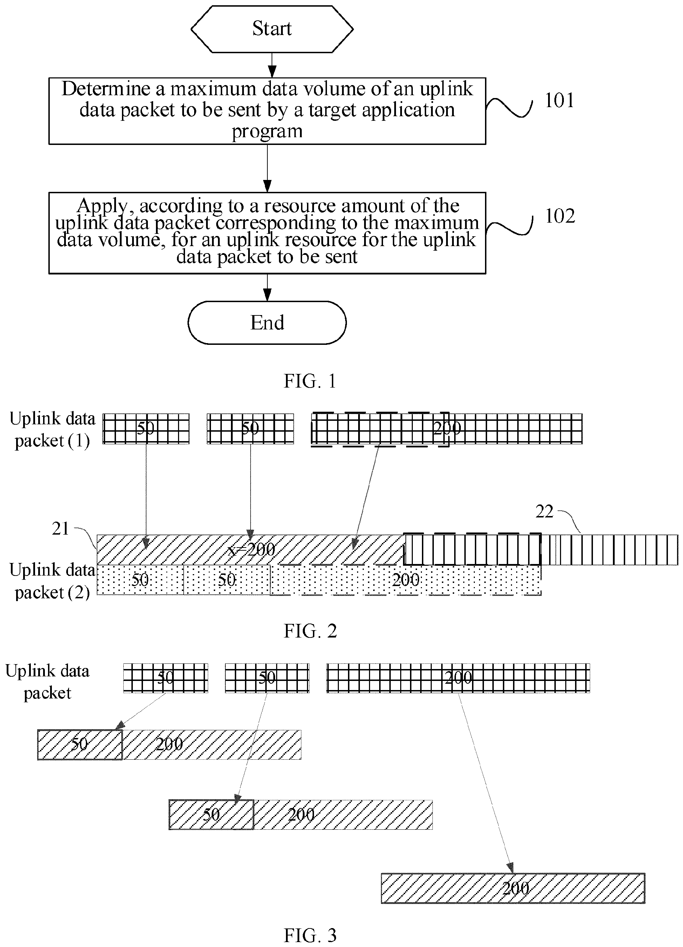

As shown in FIG. 1, the embodiment of this application provides a data network uplink scheduling method, including:

Step 101. Determine a maximum data volume of an uplink data packet to be sent by a target application program.

The target application program may be an application program to be optimized for uplink scheduling. The uplink data packet is a data packet that the electronic device needs to send to the network side. For the target application program, multiple uplink data packets of different sizes may be sent to the network side, or one data packet with a large data volume may be sent to the network side by packet splitting or other forms. The data volume of the uplink data packet is used to indicate the size of the uplink data packet, and the electronic device can count the size of each uplink data packet of the target application program, so as to determine the data volume of the largest data packet.

Step 102. Apply, according to a resource amount of the uplink data packet corresponding to the maximum data volume, for an uplink resource for the uplink data packet to be sent.

After determining the maximum data volume according to the size of each uplink data packet, the electronic device applies for uplink resources from the network side device according to the resource amount of uplink data packets required by the maximum data volume. For example: the target application includes 3 data packets, the sizes are 50, 50, and 200 respectively, that is, the data volumes of the three data packets are 50, 50, and 200 respectively, and the unit can be byte (byte). The largest data packet among them is a data packet with a data volume of 200 bytes, and the electronic device can apply for uplink resources from the network side according to the resource amount required by 200 bytes.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

As an optional embodiment, the applying, according to a resource amount of the uplink data packet corresponding to the maximum data volume, for an uplink resource for the uplink data packet to be sent may include:
determining a first resource amount according to the data volume of the uplink data packet to be sent; determining a redundant resource amount according to the resource amount of the uplink data packet corresponding to the maximum data volume; and applying, from the network side device, a first uplink resource for transmitting at least two uplink data packets to be sent; where a resource amount of the first uplink resource is equal to the sum of the first resource amount and the redundant resource amount.

The first resource amount is a resource size (a fixed value) that can be determined for the electronic device based on restrictions of the MAC layer and needs to be applied for from the network side, for example: the total data volume of all uplink data packets of the target application program of the electronic device, and it is configured that the target application program to apply for the first resource amount from the network side. The redundant resource amount is the amount of transmission resources that need to be additionally applied for based on the first resource amount. In the embodiment of this application, when applying for uplink resources from the network side, the size of the uplink data packets of the target application program can be counted, sorting may be performed according to the number of data packets of the same size, and the largest uplink data packets among the largest number of uplink data packets can be determined. On the basis of the resource value that needs to be originally applied for, the application for redundant resources is added, that is, the resource amount of the first uplink resource applied for from the network side for transmitting the uplink data packet to be sent, including the first resource amount and the redundant resource amount. Optionally, the redundant resource amount is greater than or equal to the maximum data volume.

For example, as shown in FIG. 2, the target application program needs to send 3 uplink data packets (1), and the three uplink data packets respectively have 50, 50, and 200 uplink data. Assuming that the data volume unit of the data packet is byte, according to restrictions of the MAC layer, the electronic device needs to apply for uplink transmission resources corresponding to the data volume of 200 bytes (that is, the first resource amount x) from the network side device. In this case, the data packet with a size of 200 bytes needs to be split into two transmissions (100 bytes of the 200 bytes are sent in 21 shown in FIG. 2, and the remaining 100 bytes are sent in the next x), which causes delays in the transmission of uplink data packets.

In the embodiment of this application, the additional redundant resource amount is applied on the basis of the first resource amount. For example, as shown in FIG. 2, the target application needs to send three uplink data packets (2), and the three uplink data packets respectively have uplink data of 50, 50, and 200. The electronic device determines the first resource quantity x (21 shown in FIG. 2) based on restrictions of the MAC layer. When the electronic device obtains through counting that among the uplink data packets of the target application program, the size of the uplink packet with the largest data volume is 200 (that is, the maximum data volume is 200). Then, it can be determined that the redundant resource amount is 200 (22 shown in FIG. 2). When the electronic device applies for uplink resources from the network side, the first uplink resource the electronic device needs to apply for is: x+200 (that is, the electronic device needs to apply for both 21 and 22 shown in FIG. 2 from the network side).

As shown in FIG. 2, taking x of 200 as an example, the resource applied for this time definitely can send three uplink data packets of sizes of 50, 50, and 200 in one uplink resource at the same time, and even if there are unfilled uplink resources, a next uplink data packet of the electronic device is not waited for, and instead the data packets are directly sent to the network side without causing packet splitting, thereby reducing the delay.

In this embodiment, when applying for uplink resources from the network side, on the basis of the first resource amount determined by the electronic device, additional redundant resources are applied for, and the redundant resource application is regarded as a fake window (Fake Window). The Fake Window method can ensure as much as possible that the data packets that the target application program needs to send on the uplink are sent out in the first uplink resource applied by the electronic device instead of being split into two transmissions. The scheduling of network uplink resources is optimized, and the uplink data delay is reduced.

As another optional embodiment, the applying, according to the resource amount of the uplink data packet corresponding to the maximum data volume, for an uplink resource for the uplink data packet to be sent may include:
determining a second resource amount according to the resource amount of the uplink data packet corresponding to the maximum data volume; and applying for an uplink resource amount of the second resource amount from the network side device for each uplink data packet to be sent.

In this embodiment, the second resource amount is greater than or equal to the maximum data volume. When applying for uplink resources from the network side, an uplink resource of the second resource amount is applied for each uplink data packet. The electronic device allocates an uplink resource grant of a corresponding size for each uplink data packet. In this embodiment, the electronic device can count the size of each uplink data packet of the target application program, sort according to data volumes, and select the resource amount corresponding to the uplink data packet with the largest data volume as the resource amount of each uplink data packet. For example, the maximum data volume is 200 bytes, and in this case, the electronic device needs to apply for uplink resources corresponding to 200 bytes from the network side each time. If there is an unfilled resource among uplink resources, there is no waiting for the resource to be filled, and the resource is sent directly to the network side.

As shown in FIG. 3, the electronic device has three pieces of uplink data to be sent, the sizes are 50, 50, and 200 (assuming that the unit is byte). If the electronic device obtains through counting that the maximum data volume of the uplink data packet of the target application program is 200 bytes, the electronic device applies for a UL Grant corresponding to 200 bytes from the network side. When sending the first 50-byte data packet, the electronic device fills the 50-byte data packet into the uplink resource corresponding to the 200 byte, and then sends it directly to the network side without any waiting; when sending the second 50-size data packet, the electronic device fills the 50-size data packet into the uplink resource corresponding to 200 byte, and then sends it directly to the network side without any waiting; when sending the 200-byte data packet, the electronic device fills the 200-byte data packet into the uplink resource corresponding to 200 bytes, and then sends it directly to the network side without any waiting.

In this embodiment, when the electronic device applies for uplink resources for at least two uplink data packets, it applies for uplink resources corresponding to the maximum data volume for each uplink data packet without waiting for other uplink data packets to fill up the UL Grant, and can immediately send it. By sending each uplink data packet separately, the delay of all uplink data packets is reduced.

Optionally, the method further includes: obtaining the data packet sending frequency of the target application program; and
The applying, according to the resource amount of the uplink data packet corresponding to the maximum data volume, for an uplink resource for the uplink data packet to be sent may include: according to the resource amount of the uplink data packet corresponding to the maximum data volume, applying for an uplink resource at the data packet sending frequency for the uplink data packet to be sent.

In this embodiment, since the specific moment when the target application program applies for uplink resources cannot be predicted, the sending frequency of the uplink data packet transmitted by the target application program can be counted, and when applying for uplink resources from the network side, uplink resources are applied for at the sending frequency. Specifically, an uplink resource may be applied for from the network side on a regular basis by using the obtained average value of the sending frequency as a time interval.

It should be noted that application parameters (that is, the maximum data volume and the data packet sending frequency) used when applying for the uplink resource for the uplink data packet to be sent may be the maximum data volume and the data packet sending frequency stored in the electronic device and corresponding to the target application program. If the electronic device does not store the maximum data volume and the data packet sending frequency corresponding to the target application program, before applying for uplink resources from the network side, it may obtain the maximum data volume of the uplink data packet to be sent of target application program and the data packet sending frequency of the target application program. Specifically, the maximum data volume and the data packet sending frequency of the uplink data packet of the target application program may be determined according to whether the target application program is started for the first time. Specifically, this includes: determining whether the target application program is started for the first time;
when the target application program is started for the first time, obtaining the uplink data content of the uplink data packet to be sent by the target application program, counting the maximum data volume of the uplink data packet, and customizing or determining an uplink data packet sending frequency according to network side configuration; and
when the target application program is not started for the first time, applying, according to the maximum data volume and data packet transmission frequency corresponding to the target application program and stored in the electronic device, for uplink resources for the at least two uplink data packets to be sent.

In this embodiment, when the target application program is started for the first time and the application parameters corresponding to the target application program are not stored in the electronic device, the relevant parameters need to be obtained first, and the uplink resources are applied for from the network side according to the obtained parameters; when the target application program is not started for the first time and the application parameters obtained during the last data transmission are stored in the electronic device, the stored parameters can be directly obtained to apply for uplink resources from the network side.

Optionally, after applying, according to the resource amount of the uplink data packet corresponding to the maximum data volume, for the uplink resource for the uplink data packet to be sent, the method further includes: obtaining and storing the maximum data volume and a data packet sending frequency corresponding to the target application program.

In this embodiment, after applying for uplink resources for the uplink data packet to be sent, the maximum data volume and the data packet sending frequency (which may change after applying for uplink resources) of the uplink data packet to be sent by the target application program are obtained again; and the maximum data volume and the sending frequency corresponding to the target application program stored in the electronic device are updated.

In this embodiment, since different application programs correspond to different uplink data scenes, the transmission cycles and data packet sizes of uplink data in different application programs are also different. In this application, various parameters for applying for uplink resources by electronic devices are determined according to the characteristics of the application programs. For example, the electronic device may determine whether the target application program is started for the first time (that is, it is used for the first time), and when the target application program is started for the first time, store the obtained maximum data volume and sending frequency as parameters for applying for uplink resources when the target application program is restarted. For example: the target application program is started for the first time, the electronic device obtains the uplink data content of the target application program, counts the size of each upstream data packet, sorts according to descending order of the data volumes, and can select the maximum value of the data volume as the maximum data volume P, calculate the sending frequency T of the uplink data packet, and store the P and T. When the target application is started for the second time, the stored P and T are used as application parameters for uplink resources to apply for uplink resources from the network side.

When the target application program is not started for the first time, the maximum data volume P and the sending frequency T have been stored, and the uplink resources can be applied directly according to the stored P and T. After applying for the uplink resources, the electronic device recounts the data volume of the uplink data packet of the target application program, determines the maximum data volume P'; recounts the uplink data packet sending frequency T' of the target application program, stores the maximum data volume P' and the sending frequency T', and updates the stored P and T to continuously optimize the uplink resource application parameters.

Optionally, the determining the maximum data volume of the uplink data packet to be sent by the target application program may include: obtaining a data volume of each uplink data packet among the uplink data packets to be sent; determining numbers of uplink data packets with same data volumes; sorting the numbers, and determining, as the maximum data volume of the uplink data packet to be sent, a maximum data volume of uplink data packets corresponding to the first N numbers in descending order of the numbers, where N is positive integer.

In this embodiment, when determining the maximum data volume, the data volume of each uplink data packet of the target application program can be obtained first, and the numbers of data packets with same data volumes can be determined, and a maximum data volume of data packets corresponding to the first N numbers in descending order of the numbers is taken as the maximum data volume of the uplink data packet to be sent. That is, the size of each uplink data packet is determined, the number of data packets of the same size is determined, sorting is performed according to the descending order of the numbers, and a data volume of a maximum data packet among uplink data packets corresponding to the first N numbers is taken as the maximum data volume of the uplink data packet to be sent.

Taking N as 3 as an example, there are 10 uplink data packets to be sent by the target application program, and the data volume of each data packet is: 50, 50, 100, 100, 100, 200, 200, 200, 200, and 300. The number of data packets with a data volume of 50 is 2, the number of data packets with a data volume of 100 is 3, the number of data packets with a data volume of 200 is 4, and the number of data packets with a data volume of 300 is 1. Then, the numbers are sorted in descending order: 4, 3, 2, 1, the first 3 numbers are: 4, 3, 2, the maximum data volume of the data packets with the number of 4, 3, and 2 is 200, and then the 200 is determined as the maximum data volume of the uplink data packet to be sent. It should be noted that the N may also be other positive integers, such as 5.

When applying, according to the resource amount of the uplink data packet corresponding to the maximum data volume, for an uplink resource for the uplink data packet to be sent, the maximum data volume of the uplink data packet to be sent may be determined in the above manner, and the data packet sending frequency is calculated, the application for redundant resources is added according to the uplink data packet resource corresponding to the maximum data volume, and the application for redundant resources is used as a Fake Window to apply for uplink resources, or an uplink resource whose resource amount is the second resource amount is applied for each uplink data packet.

The following describes the process of implementing uplink resource scheduling according to different application scenes of the target application program through specific embodiments.

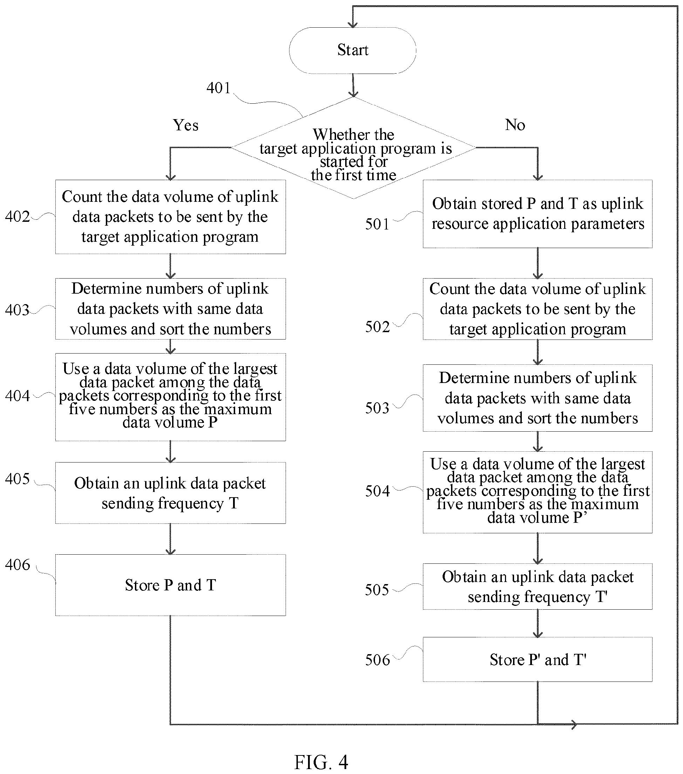

As shown in FIG. 4, the following steps are included.

Step 401: The electronic device determines whether the target application program is started for the first time.

Step 402: If the target application program is started for the first time, count a data volume of the uplink data packet to be sent by the target application program.

Step 403: Determine numbers of uplink data packets with same data volumes, and sort the numbers.

Step 404: Use a data volume of the largest data packet among the data packets corresponding to the first five numbers in descending order of the numbers as the maximum data volume P.

Step 405: Obtain the sending frequency T of the uplink data packet, which may be the average value of the sending frequencies.

Step 406: Store the maximum data volume P and the sending frequency T.
or
Step 501: If the target application program is not started for the first time, obtain the stored maximum data volume P and sending frequency T as application parameters for uplink resources.

Step 502: Count a data volume of the uplink data packet to be sent by the target application program.

Step 503: Determine numbers of uplink data packets with same data volumes, and sort the numbers.

Step 504: Use a data volume of the largest data packet among the data packets corresponding to the first five numbers in descending order of the numbers as the maximum data volume P' .

Step 505: Obtain the sending frequency T' of the uplink data packet, which may be the average value of the sending frequencies.

Step 506: Store the maximum data volume P' and the sending frequency T', and update the stored maximum data volume P and sending frequency T.

In this embodiment, when the target application is started for the first time, the maximum data volume and sending frequency are counted and stored, and when the target application is started again, the stored maximum data volume and sending frequency are used to apply for uplink resources. Every time the target application is started, the maximum data volume and sending frequency are counted, and the stored data of the maximum data volume and sending frequency are updated, which can continuously optimize the uplink resource application parameters.

For different applications, the corresponding maximum data volume and sending frequency parameters are counted and stored separately. When the application is switched, the electronic device can switch the corresponding uplink resource application parameters (the maximum data volume and sending frequency), and the optimal delay reduction can be achieved. Electronic devices can adaptively adjust uplink resource application parameters according to different applications, and continuously optimize the uplink resource application parameters during application usage, which can resist parameter instability caused by network dynamic changes and increase robustness.

It should be noted that for Long Term Evolution (Long Term Evolution, LTE)/Standalone (Standalone, SA)/Non-Standalone (Non-Standalone, NSA) environments, the method of the embodiment of the application can be used to reduce the network uplink data transmission delay.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

It should be noted that, the data network uplink scheduling method provided by the embodiment of this application may be executed by a data network uplink scheduling apparatus, or a control module in the data network uplink scheduling apparatus for executing the data network uplink scheduling method. In the embodiment of this application, the data network uplink scheduling method being performed by the data network uplink scheduling apparatus is taken as an example to describe the data network uplink scheduling apparatus provided in the embodiment of this application.

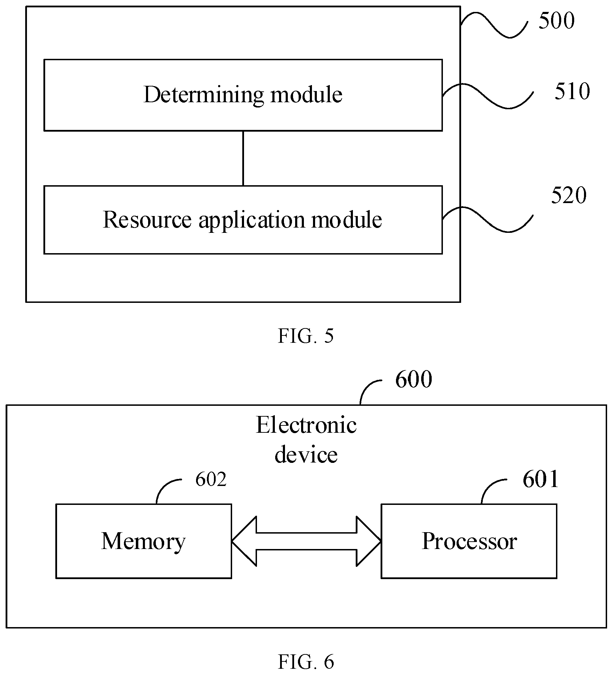

As shown in FIG. 5, the embodiment of this application also provides a data network uplink scheduling apparatus 500, including:
a determining module 510, configured to determine a maximum data volume of an uplink data packet to be sent by a target application program; and
The resource application module 520 is configured to apply, according to the resource amount of the uplink data packet corresponding to the maximum data volume, for an uplink resource for the uplink data packet to be sent.

Optionally, the resource application module includes:
a first determining unit, configured to determine a first resource amount according to a data volume of the uplink data packet to be sent;
a second determining unit, configured to determine a redundant resource amount according to a resource amount of the uplink data packet corresponding to the maximum data volume; and
a first application unit, configured to apply for a first uplink resource from the network side device to transmit the uplink data packet to be sent;
where a resource amount of the first uplink resource is the sum of the first resource amount and the redundant resource amount.

Optionally, the resource application module includes:
a third determining unit, configured to determine a second resource amount according to the resource amount of the uplink data packet corresponding to the maximum data volume; and
a second application unit, configured to: for each uplink data packet to be sent, apply for an uplink resource whose resource amount is the second resource amount from the network side device.

Optionally, the apparatus further includes:
a processing module, configured to obtain and store the maximum data volume and a data packet sending frequency corresponding to the target application program.

Optionally, the apparatus further includes:
an obtaining module, configured to obtain the data packet sending frequency of the target application program; and
the resource application module is specifically configured to apply, at the data packet sending frequency according to the resource amount of the uplink data packet corresponding to the maximum data volume, for an uplink resource for the uplink data packet to be sent.

Optionally, the determining module includes:
a first obtaining unit, configured to obtain a data volume of each uplink data packet among uplink data packets to be sent;
a first determining unit, configured to determine numbers of uplink data packets with same data volumes; and
a second determining unit, configured to sort the numbers, and determine, as the maximum data volume of the uplink data packet to be sent, a maximum data volume of uplink data packets corresponding to the first N numbers in descending order of the numbers.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

The data network uplink scheduling apparatus in the embodiment of this application may be a device, or a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (Ultra-mobile Personal Computer, UMPC), a netbook, or a personal digital assistant (Personal Digital Assistant, PDA). The non-mobile electronic device may be a server, a network attached storage (Network Attached Storage, NAS), a personal computer (Personal Computer, PC), a television (television, TV), an automated teller machine or a self-service machine. This is not specifically limited in the embodiments of this application.

The data network uplink scheduling apparatus in the embodiment of this application may be a device with an operating system. The operating system may be an Android (Android) operating system, may be an iOS operating system, or may be another possible operating system. This is not specifically limited in this embodiment of this application.

The data network uplink scheduling apparatus provided in the embodiment of this application can realize various processes implemented by the data network uplink scheduling apparatus in the method embodiments in FIG. 1 to FIG. 4. To avoid repetition, details are not repeated here.

Optionally, as shown in FIG. 6, the embodiments of this application further provide an electronic device 600, including a processor 601, a memory 602, and a program or instruction stored in the memory 602 and executable on the processor 601, When the program or instruction is executed by the processor 601, each process of the data network uplink scheduling method embodiment described above can be realized, and the same technical effect can be achieved. To avoid repetition, details are not repeated herein.

It should be noted that the electronic device in this embodiment of this application includes the foregoing mobile electronic device and the foregoing non-mobile electronic device.

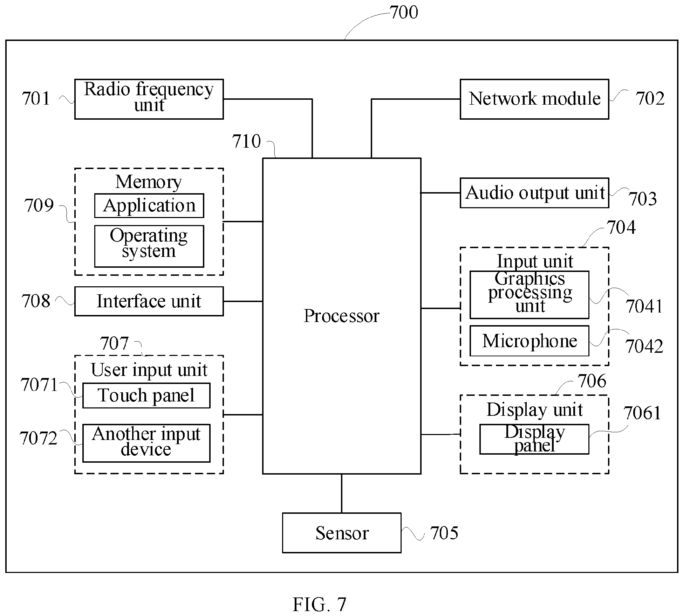

FIG. 7 is a schematic structural diagram of hardware of an electronic device according to an embodiment of this application.

An electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the electronic device 700 may further include a power supply (such as a battery) that supplies power to each component. The power supply may be logically connected to the processor 710 by using a power supply management system, to implement functions such as charging and discharging management, and power consumption management by using the power supply management system. The structure of the electronic device shown in FIG. 7 does not constitute a limitation on the electronic device. The electronic device may include components more or fewer than those shown in the diagram, a combination of some components, or different component arrangements. Details are not described herein.

The processor 710 is configured to: determine a maximum data volume of an uplink data packet to be sent by a target application program; and
apply, according to a resource amount of the uplink data packet corresponding to the maximum data volume, for an uplink resource for the uplink data packet to be sent.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

Optionally, the processor 710 is specifically configured to:
determine a first resource amount according to the data volume of the uplink data packet to be sent;
determine a redundant resource amount according to the resource amount of the uplink data packet corresponding to the maximum data volume; and
apply for a first uplink resource from the network side device for transmitting the uplink data packet to be sent;
where a resource amount of the first uplink resource is the sum of the first resource amount and the redundant resource amount.

Optionally, the processor 710 is specifically configured to: determine a second resource amount according to the resource amount of the uplink data packet corresponding to the maximum data volume; and
apply, for each uplink data packet to be sent, for an uplink resource whose resource amount is the second resource amount from the network side device.

Optionally, after applying, according to the resource amount of the uplink data packet corresponding to the maximum data volume, for the uplink resource for the uplink data packet to be sent, the processor 710 is further configured to: obtain and store the maximum data volume and a data packet sending frequency corresponding to the target application program.

Optionally, before applying, according to the resource amount of the uplink data packet corresponding to the maximum data volume, for an uplink resource for the uplink data packet to be sent, the processor 710 is further configured to:
obtain the data packet sending frequency of the target application program.

When applying, according to the resource amount of the uplink data packet corresponding to the maximum data volume, for an uplink resource for the uplink data packet to be sent, the processor 710 is specifically configured to:
according to the resource amount of the uplink data packet corresponding to the maximum data amount, apply for an uplink resource at the data packet sending frequency for the uplink data packet to be sent.

Optionally, when determining the maximum data volume of the uplink data packet to be sent by the target application program, the processor 710 is specifically configured to:
obtain a data volume of each uplink data packet among the uplink data packets to be sent; and
determine numbers of uplink data packets with same data volumes; and
sort the numbers, and determine, as the maximum data volume of the uplink data packet to be sent, a maximum data volume of uplink data packets corresponding to the first N numbers in descending order of the numbers, where N is a positive integer.

In the embodiment of this application, according to the resource amount corresponding to the maximum data volume of the uplink data packets to be sent by the target application program, the uplink resource is applied for the uplink data packet to be sent, so as to ensure that the data packet that needs to be sent on uplink does not need to be unpacked, which can avoid packet splitting of the data packet caused because an uplink resource configured on the network side does not meet uplink transmission requirements, can reduce uplink data transmission delay and optimize network uplink resource scheduling.

It should be understood that, in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 1071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein. The memory 709 may be configured to store a software program and various data, including but not limited to an application and an operating system. An application processor and a modem processor may be integrated into the processor 710, the application processor mainly processes an operating system, a user interface, an application, and the like, and the modem processor mainly processes wireless communication. It can be understood that, alternatively, the modem processor may not be integrated into the processor 710.

An embodiment of this application further provides a readable storage medium. The readable storage medium stores a program or an instruction, and when the program or the instruction is executed by a processor, the various processes of the foregoing data network uplink scheduling method embodiment is performed and the same technical effects can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, the chip includes a processor and a communication interface, the communication interface is coupled to the processor, and the processor is configured to run programs or instructions to implement each process of the embodiment of the foregoing data network uplink scheduling method and the same technical effects can be achieved. To avoid repetition, details are not described herein again.

It should be understood that the chip mentioned in this embodiment of this application may also be referred to as a system-level chip, a system chip, a chip system, or an on-chip system chip.

The embodiments of this application further provide a computer program product, the computer program product is stored in a non-volatile storage medium, and the computer program product is executed by at least one processor to implement the various processes of the data network uplink scheduling method embodiments, and the same technical effects can be achieved. To avoid repetition, details are not described herein again.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A data network uplink scheduling method, comprising:
determining a maximum data volume of an uplink data packet to be sent by a target application program; and
applying, according to a resource amount of the uplink data packet corresponding to the maximum data volume, for an uplink resource for the uplink data packet to be sent.

2. The method according to claim 1, wherein the applying, according to a resource amount of the uplink data packet corresponding to the maximum data volume, for an uplink resource for the uplink data packet to be sent comprises:
determining a first resource amount according to the data volume of the uplink data packet to be sent;
determining a redundant resource amount according to the resource amount of the uplink data packet corresponding to the maximum data volume; and
applying for a first uplink resource from the network side device for transmitting the uplink data packet to be sent;
wherein a resource amount of the first uplink resource is the sum of the first resource amount and the redundant resource amount.

3. The method according to claim 1, wherein the applying, according to a resource amount of the uplink data packet corresponding to the maximum data volume, for an uplink resource for the uplink data packet to be sent comprises:
determining a second resource amount according to a resource amount of the uplink data packet corresponding to the maximum data volume; and
applying, for each uplink data packet to be sent, for an uplink resource whose resource amount is the second resource amount from the network side device.

4. The method according to claim 1, wherein after the applying, according to a resource amount of the uplink data packet corresponding to the maximum data volume, for an uplink resource for the uplink data packet to be sent, the method further comprises:
obtaining and storing the maximum data volume and a data packet sending frequency corresponding to the target application program.

5. The method according to claim 1, wherein before the applying, according to a resource amount of the uplink data packet corresponding to the maximum data volume, for an uplink resource for the uplink data packet to be sent, the method further comprises:
obtaining the data packet sending frequency of the target application program; and
the applying, according to a resource amount of the uplink data packet corresponding to the maximum data volume, for an uplink resource for the uplink data packet to be sent comprises:
according to the resource amount of the uplink data packet corresponding to the maximum data amount, applying for an uplink resource at the data packet sending frequency for the uplink data packet to be sent.

6. The method according to claim 1, wherein the determining a maximum data volume of an uplink data packet to be sent by a target application program comprises:
obtaining a data volume of each uplink data packet among the uplink data packets to be sent; and
determining numbers of uplink data packets with same data volumes; and
sorting the numbers, and determining, as the maximum data volume of the uplink data packet to be sent, a maximum data volume of uplink data packets corresponding to the first N numbers in descending order of the numbers, wherein N is a positive integer.

7. A data network uplink scheduling apparatus, comprising:
a determining module, configured to determine a maximum data volume of an uplink data packet to be sent by a target application program; and
a resource application module, configured to apply, according to a resource amount of the uplink data packet corresponding to the maximum data volume, for an uplink resource for the uplink data packet to be sent.

8. The apparatus according to claim 7, wherein the resource application module comprises:
a first determining unit, configured to determine a first resource amount according to a data volume of the uplink data packet to be sent;
a second determining unit, configured to determine a redundant resource amount according to a resource amount of the uplink data packet corresponding to the maximum data volume; and
a first application unit, configured to apply for a first uplink resource from the network side device to transmit the uplink data packet to be sent;
wherein a resource amount of the first uplink resource is the sum of the first resource amount and the redundant resource amount.

9. The apparatus according to claim 7, wherein the resource application module comprises:
a third determining unit, configured to determine a second resource amount according to the resource amount of the uplink data packet corresponding to the maximum data volume; and
a second application unit, configured to: for each uplink data packet to be sent, apply for an uplink resource whose resource amount is the second resource amount from the network side device.

10. The apparatus according to claim 7, wherein the apparatus further comprises:
a processing module, configured to obtain and store the maximum data volume and a data packet sending frequency corresponding to the target application program.

11. The apparatus according to claim 7, wherein the apparatus further comprises:
an obtaining module, configured to obtain the data packet sending frequency of the target application program; and
the resource application module is specifically configured to apply, at the data packet sending frequency according to the resource amount of the uplink data packet corresponding to the maximum data volume, for an uplink resource for the uplink data packet to be sent.

12. The apparatus according to claim 7, wherein the determining module comprises:
a first obtaining unit, configured to obtain a data volume of each uplink data packet among uplink data packets to be sent;
a first determining unit, configured to determine numbers of uplink data packets with same data volumes; and
the second determining unit is configured to sort the numbers, and determine, as the maximum data volume of the uplink data packet to be sent, a maximum data volume of uplink data packets corresponding to the first N numbers in descending order of the numbers, wherein N is a positive integer.

13. An electronic device, comprising a processor, a memory, and a program or instruction stored on the memory and executable on the processor, wherein when the program or instruction is executed by the processor, steps of the data network uplink scheduling method according to any one of claims 1 to 6 are implemented.

14. A readable storage medium, storing a program or an instruction, wherein when the program or instruction is executed by a processor, steps of the data network uplink scheduling method according to any one of claims 1 to 6 are implemented.

15. A chip, comprising a processor and a communication interface, wherein the communication interface is coupled to the processor, and the processor is configured to run a program or an instruction, so that steps of the data network uplink scheduling method according to any one of claims 1 to 6 are implemented.

16. A computer program product, wherein the computer program product is stored in a non-volatile storage medium, and the computer program product is executed by at least one processor to implement the steps of the data network uplink scheduling method according to any one of claims 1 to 6.
